Europäisches Patentamt

European Patent Office

Office européen des brevets

(19)

(11) Publication number: **0 212 818**
A1

(12) # EUROPEAN PATENT APPLICATION

(21) Application number: **86305158.7**

(22) Date of filing: **03.07.86**

(51) Int. Cl.⁴: **G 01 F 15/06,** G 01 F 3/22,
G 01 D 5/06

---

(30) Priority: **03.08.85 GB 8519585**

(43) Date of publication of application: **04.03.87**
**Bulletin 87/10**

(84) Designated Contracting States: **AT BE DE FR GB IT NL
SE**

(71) Applicant: **SMITH METERS LIMITED, 170, Rowan Road,
Streatham Vale London, SW16 5JE (GB)**

(72) Inventor: **Roberts, John Arthur, 43, Wood Street Ash
Vale, Aldershot Hants. GU12 5JF (GB)**

(74) Representative: **Betteridge, Eileen Margaret, 170,
Rowan Road, Streatham Vale London, SW16 5JE (GB)**

(54) **Commodity meters.**

(57) A commodity meter is adapted to have an upwardly facing index on its top cover (13) by taking a vertical drive train (25, 36, 23, 26) from a measuring device (not shown) through the top cover. The train includes a magnetic coupling (23, 26) driving across the cover. Difficulty is found in assembly of this arrangement because the cover has to be placed and located over the vertical drive train. This difficulty is met by using the magnetic properties of the magnetic coupling to suspend the vertical drive train from the cover and then to assemble the cover, coupling and drive train as one unit.

## COMMODITY METERS.

This invention relates to commodity meters having mechanically-driven indexes providing a visually readable tally of the use of the commodity. Such meters commonly have an internal measuring device contained in a casing, the index being mounted on the outside of the casing and driven through the casing by a magnetic coupling.

It has been proposed for convenience to locate such meters in positions in which the reading has to be taken from above, for example the meter may be partially or wholly buried in the ground. The index must then be mounted on the top cover of the meter so that it points upwards. This arrangement leads to assembly difficulties in putting together a vertical drive train from the internal measuring device to one side of the magnetic coupling and keeping the train in place while the cover and the other side of the magnetic coupling are positioned over it.

The invention provides a method of assembling a commodity meter of the kind having an internal measuring device in a main casing, and a magnetic coupling (25, 26) for transferring drive across a cover member (13) characterized by using the magnetic properties of the magnetic coupling (25, 26) to suspend the members of a drive train (35, 36, 23) vertically from the cover member and then lowering the cover member (13), coupling and drive train into position on the main casing so that the drive train engages the internal measuring device.

The two parts of the magnetic coupling, one of which may comprise an annulus surrounding the other, are attracted toward one another so that the magnet beneath the cover part is held up in place without other support and is able to support the drive train which is mechanically secured to it falling vertically down from it. Therefore reasonably careful handling of the cover part enables the assembly to be made intact.

The invention also extends to a commodity meter adapted for the method of assembly described above. The meter may have location means (38) at the free end of the drive train serving to locate and support the drive train.

PM478

Specific embodiments of the invention are shown in the accompanying drawings, in which:-

Figure 1   is an exploded perspective view of a gas meter made according to the invention,

Figure 2   is a detail from Figure 1 illustrating the method of assembly, and

Figures 3a and 3b are side and end views of an alternative design of locater for use in the arrangement of Figures 1 and 2.

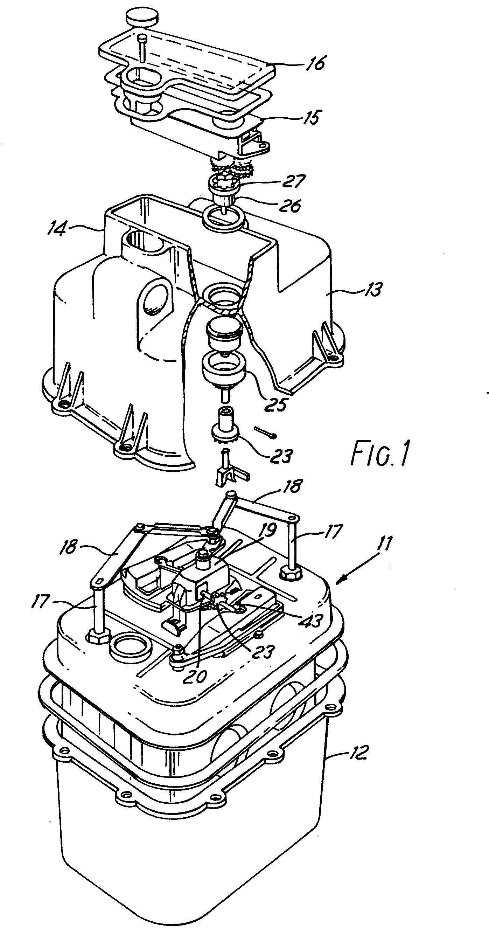

Referring first to Figure 1, a gas meter (11) comprises a lower die-cast aluminium casing (12) and a top cover (13) of similar construction. Integrally cast into the top cover are the walls of an index compartment (14) providing an open top facing vertically upwardly. Index (15) is mounted in the compartment with a transparent index cover (16) covering the open top. Thus the meter reading can be taken looking vertically downwardly at the meter as is

PM478

-3-

required if the meter is located below ground level or in a compartment partially sunk into the ground.

In order to effect a mechanical drive to the index (15) from the measuring parts of the meter a vertical drive path has to be followed. The measuring parts of the meter comprise two flexible diaphragms moving back and forth in compartments, the back and forth movements being translated via elements (17, 18) into rotation in a gearbox (19) from which a rotating output drive shaft (20) extends. A contrate pinion (22) is secured to rotate with shaft (20). A contrate driven wheel (23) connects with the pinion (22) at right angles to the drive shaft (20), so as to provide drive to a normally vertical drive train.

Wheel (23) is pinned to an annular magnet (25) which in turn drives a cylindrical magnet (26). A drive gear (27) secured to magnet (26) engages an input drive to a gear train driving the index (15).

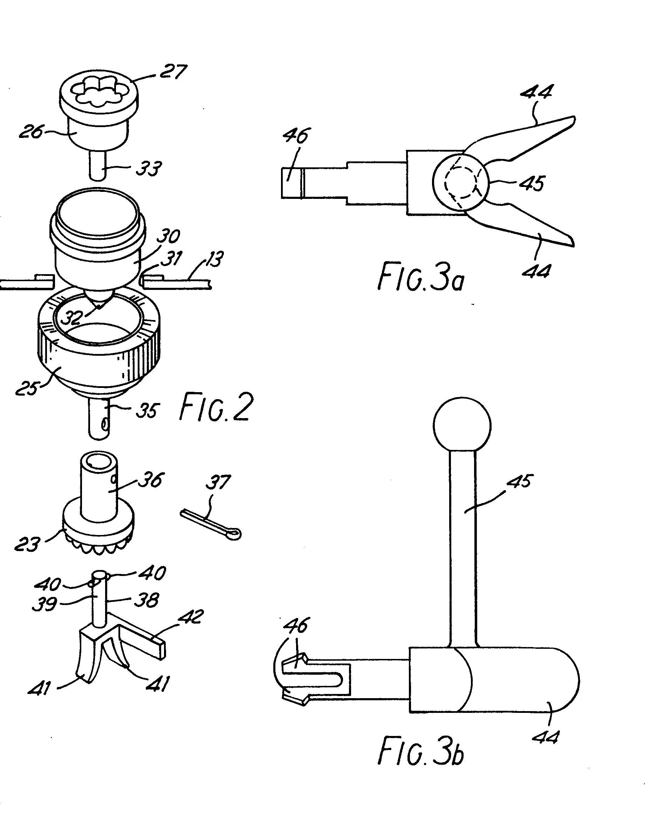

Figure 2 shows the normally vertical drive train in more detail. In order to assemble the drive train a cup-shaped bearing member (30) of non-magnetic material is secured to an opening (31) in the top cover (13), the opening entering into the index compartment (15). The bearing member is secured, for instance by welding or soldering or riveting to form a gas-tight seal. The cup shape is imperforate, so allowing no gas escape, and has a blind central extension (32) into which seats a support shaft (33) on which cylindrical magnet (26) is mounted. The magnet (26) is thus seated in the cup of bearing member (30) and lies within its circumference, mainly on the opposite side of cover (13) from the index compartment. Annular magnet (25) fits over the outer circumference of bearing member (30) and when so positioned is held by the magnetic attraction of cylindrical magnet (26) which is closely adjacent, separated by bearing member (30). In use, drive is imparted across the imperforate bearing member by magnetic attraction without physical contact.

PM478

A short shaft (35) extends from the bottom of magnet (25). Wheel (23) is mounted on a tube (36) which fits over shaft (35), the two being secured together by a split pin (37) passing through aligned holes. A locater (38) has an upstanding shaft (39) with a pair of opposed pegs (40) at its upper end. The shaft (39) slides into the tube (36) with the pegs engaging in slots, the locater when fully engaged being turned to engage the pegs in a circular groove (not shown) which holds the locater in the tube while allowing the tube freedom to rotate relative to the locater.

The lower end of the locater is formed as a pair of splayed legs (41) with a locking bar (42) extending normally thereto. The legs (41) and bar (42) are orientated to engage over shaft (20) as described hereinafter.

In assembly, the drive train shown in Figure 2 is put together in the top cover (13), and it will be seen that the items thereof all hold together with the top cover right way up. The magnetic attraction between magnets (25) and (26) is sufficient to hold the drive elements suspended in a line beneath cover (13). Pin (37) holds the annular magnet secured to the tube (36) and pegs (40) hold the locater engaged with tube (36). Thus the drive can be assembled into a unit with the top cover. The casing (12) is assembled as a separate unit with the measuring parts of the meter, elements (17), (18), (19), (20) and (21) all in place. The assembled top cover is then lowered onto the casing (12) so that the legs of locater (38) straddle the shaft (20) and locking bar (42) slides into a slot (43). In this action pinion wheel (23) engages with pinion (22) so that the drive path is completed. Locater (38) provides a lower support for the drive path and is prevented from rotating by locking bar (42). Thus, provided the legs (41) and bar (42) are turned to the correct angular position, the action of placing the top cover over the casing (12) automatically locates and engages the drive even though this

PM478

-5-

has to be done blind.   The parts cannot be viewed or handled as the drive is completed, because the top cover prevents this.

With the drive completed and top cover in position, the index housing (14) is filled with the index parts as described above and the horizontal index cover (16) secured to the open top.

Figures 3a and 3b show an alternative form of the locater (38).   As seen, similar splayed legs (44) carry out the same function as legs (41).   The locking bar (45) in this embodiment has a spherical end and the slot in the meter for reception of the bar has to be accordingly shaped. The pegs (40) of the previous embodiment are replaced by shoulders mounted on flexible parts (46) which can engage over an internal rim in the tube (36), thus preventing disengagement of the locater while allowing the tube (36) to rotate relative to the locater.

PM478

CLAIMS:-

1.    A method of assembling a commodity meter of the kind having an internal measuring device and a magnetic coupling (25, 26) for transferring drive across a cover member (13) characterized by using the magnetic properties of the magnetic coupling (25, 26) to suspend members of a drive train (35, 36, 23) vertically from the cover member and then lowering the cover member (13) coupling and drive train into position on a main casing (12) so that the drive train engages the internal measuring device.

2.    A method as claimed in claim 1, further characterized by placing both members of the magnetic coupling (25, 26) in position on either side of the cover member (13), and mechanically securing members of the drive train (35, 36, 23) to one of the magnetic coupling members (25).

3.    A method as claimed in claim 2, further characterized by securing a locater (38) to the free end of the drive train, orientating said locater (38) so that when the cover member (13) is lowered into position the locater engages stationary structure and acts as an end support for the drive train.

4.    A method as claimed in claim 3, further characterized by said step of lowering the cover member (13) into position also lowering a locking bar (42) on the locater (38) into a slot (43) in the main casing so as to prevent rotation of the locking bar.

5.    A method as claimed in any of claims 1 to 4, further characterized by said step of lowering the cover member into position also bringing a driven gear (23) into engagement with a driving gear (22) which is mounted in the main casing.

6.    A commodity meter of the kind having a magnetic coupling for transferring drive across a cover member (13) and a drive train within the meter characterized by said drive train (35, 36, 23) and magnetic coupling (25, 26) being adapted for assembly by the method of any of claims 1 to 5.

7.    A commodity meter as claimed in claim 6, further characterized by the members of the drive train (35, 36, 23) being secured together by means of pins whereby the members may be suspended in a vertical line without disengaging.

PM478

8. A commodity meter as claimed in claim 7, further characterized by a locater (38) secured to the end of the drive train and having splayed legs (41, 44) which may be orientated to straddle a drive shaft (20) supporting said driving gear (22).

9. A commodity meter as claimed in claim 8, further characterized by said locater (38) having a locking bar (42, 45) engaged in a slot (43).

0212818

1/2

FIG.1

FIG.2

FIG.3a

FIG.3b

European Patent Office

**EUROPEAN SEARCH REPORT**

Application number

| | DOCUMENTS CONSIDERED TO BE RELEVANT | | EP 86305158.7 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | GB - A - 1 077 943 (COMPAGNIE DES COMPTEURS)<br>* Claim 1; fig. 4 *<br>-- | 6 | G 01 F 15/06<br>G 01 F 3/22<br>G 01 D 5/06 |
| A | CH - A - 234 146 (NOVELTEC)<br>* Claim; fig. *<br>-- | 6 | |
| A | DE - B - 2 137 482 (ELSTER AG)<br>* Claim 1; fig. 1 *<br>-- | | |
| A | DE - B - 1 240 677 (SIEMENS AKTIEN-GESELLSCHAFT)<br>* Claim 1; fig. 2 *<br>---- | | |
| | | | **TECHNICAL FIELDS SEARCHED (Int. Cl.4)**<br><br>G 01 F 3/00<br>G 01 F 15/00<br>G 01 D 5/00<br>G 01 F 1/00 |

The present search report has been drawn up for all claims

| Place of search | Date of completion of the search | Examiner |
|---|---|---|
| VIENNA | 31-10-1986 | STÖGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82